# EUROPÄISCHE PATENTSCHRIFT

(11) **EP 3 795 269 B1**
(45) Veröffentlichungstag und Bekanntmachung des Hinweises auf die Patenterteilung: **03.04.2024**
(21) Anmeldenummer: 20195538.2
(22) Anmeldetag: 10.09.2020
(51) Int. Cl.: B21D 28/14, B21D 28/34, B21D 37/04

(54) **BEFESTIGUNGSEINRICHTUNG ZUM BEFESTIGEN EINES BEARBEITUNGSWERKZEUGS AN EINER WERKZEUGMASCHINE, WERKZEUGANORDNUNG, WERKZEUGMAGAZIN UND VERFAHREN ZUM BETRIEB EINER WERKZEUGMASCHINE**
FASTENING DEVICE FOR FASTENING A MACHINING TOOL TO A MACHINE TOOL, TOOL ARRANGEMENT, TOOL MAGAZINE AND METHOD FOR OPERATING A MACHINE TOOL
DISPOSITIF DE FIXATION PERMETTANT DE FIXER UN OUTIL D'USINAGE À UNE MACHINE-OUTIL, AGENCEMENT D'OUTILS, CHARGEUR D'OUTILS ET PROCÉDÉ DE FONCTIONNEMENT D'UNE MACHINE-OUTIL

(30) Priorität: 18.09.2019 DE 102019214238
(43) Veröffentlichungstag der Anmeldung: 24.03.2021
(73) Patentinhaber: PASS Stanztechnik AG, 95473 Creußen (DE)
(72) Erfinder: Deuerlein, Andreas, 91349 Egloffstein (DE); Kraft, Stefan, 91289 Schnabelwaid (DE)
(74) Vertreter: Rau, Schneck & Hübner Patentanwälte Rechtsanwälte PartGmbB

(56) Entgegenhaltungen:
- EP-B1- 0 802 000
- WO-A1-2009/158207
- DE-A1- 4 218 656
- DE-U1-202014 100 456
- JP-A- H1 190 557
- JP-A- H05 228 554

## Beschreibung

Die vorliegende Patentanmeldung nimmt die Priorität der deutschen Patentanmeldung DE 10 2019 214 238.9 in Anspruch.

Die Erfindung betrifft eine Befestigungseinrichtung zum Befestigen eines Bearbeitungswerkzeugs an einer Werkzeugmaschine, insbesondere an einer Pressvorrichtung. Ferner betrifft die Erfindung eine Werkzeuganordnung mit einer derartigen Befestigungseinrichtung und ein Werkzeugmagazin mit mehreren solchen Werkzeuganordnungen. Die Erfindung betrifft auch ein Verfahren zum Betrieb einer Werkzeugmaschine.

Aus offenkundigen Vorbenutzungen sind Befestigungseinrichtungen zum Befestigen eines Bearbeitungswerkzeugs an einer Werkzeugmaschine, insbesondere an einem Werkzeugrevolver einer Pressvorrichtung, bekannt. Derartige Befestigungseinrichtungen umfassen einen Anlagekörper gegen den das Bearbeitungswerkzeug spannbar ist und eine Spanneinheit zum lösbaren Verspannen des Bearbeitungswerkzeugs mit dem Anlagekörper. Die Spanneinheit wird hierbei mit dem Anlagekörper verschraubt, wodurch die erforderliche Spannkraft auf das Bearbeitungswerkzeug übertragen wird. Nachteilig ist, dass das Verspannen des Bearbeitungswerkzeugs mit dem Anlagekörper sowie das Lösen von dem Anlagekörper zeitaufwendig ist. Der für das Ein- und Ausrüsten des Bearbeitungswerkzeugs erforderliche Zeitaufwand wirkt sich nachteilig auf die Wirtschaftlichkeit der Werkzeugmaschine im Betrieb aus.

Eine Werkzeugwechselvorrichtung zum Wechseln von Stempeln und Matrizen an einer Revolverstanzpresse ist bekannt aus der DE 42 18 656 A1. Befestigungseinrichtungen zum Befestigen eines Bearbeitungswerkzeugs an einer Werkzeugmaschine sind ferner bekannt aus der WO 2009/158207 A1, auf welche der Oberbegriff des Patentanspruchs 1 basiert, der JP H05 228554 A und der JP H11 90557 A. Ein Werkstückhalter für eine spanabhebende Bearbeitungsmaschine ist bekannt aus der DE 20 2015 100 491 U1.

Es ist eine Aufgabe der Erfindung, eine Befestigungseinrichtung für eine Werkzeugmaschine zu schaffen, welche das Ein- und Ausrüsten eines Bearbeitungswerkzeugs in besonders zeiteffizienter Weise erlaubt und dadurch einen besonders wirtschaftlichen Betrieb der Werkzeugmaschine ermöglicht.

Diese Aufgabe wird durch eine Befestigungseinrichtung gemäß den Merkmalen des Patentanspruchs 1 gelöst.

Die Spanneinheit ist dazu ausgebildet, insbesondere unter Ausübung einer Spannkraft auf das Bearbeitungswerkzeug, das Bearbeitungswerkzeug mit dem mindestens einen Anlagekörper zu verspannen. Mit anderen Worten stellt die Spanneinheit eine Spannkraft zum Verspannen des Bearbeitungswerkzeugs gegen den mindestens einen Anlagekörper bereit. Die Spanneinheit bewirkt somit eine kraftschlüssige Befestigung des Bearbeitungswerkzeugs an dem Anlagekörper. Vorteilhaft ist, dass das Bearbeitungswerkzeug hierdurch spielfrei und präzise an dem Anlagekörper befestigbar ist. Insbesondere gewährleistet die Spanneinheit den Ausgleich von Maßtoleranzen zwischen dem Bearbeitungswerkzeug und dem mindestens einen Anlagekörper und/oder der Spanneinheit.

Vorzugsweise ist die Spanneinheit derart ausgebildet, dass die Spannkraft auf das Bearbeitungswerkzeug schräg, insbesondere senkrecht, zu einer Bearbeitungsrichtung wirkt, in welcher das Bearbeitungswerkzeug mit dem Werkstück zusammenwirkt.

Die Spanneinheit und die Riegelverbindung sind derart ausgebildet, dass das Bereitstellen der Spannkraft und das Verbinden der Spanneinheit mit dem mindestens einen Anlagekörper unabhängig voneinander erfolgen können. Vorteilhaft wird hierdurch erreicht, dass zum Verbinden der Spanneinheit mit dem mindestens einen Anlagekörper die Spannkraft nicht zunächst überwunden werden muss. Das Befestigen des Bearbeitungswerkzeugs an der Werkzeugmaschine ist somit besonders einfach und mit geringem Kraftaufwand möglich. Vorzugsweise ist die Spanneinheit dazu ausgebildet, eine Spannkraft bereitzustellen, welche in eine von der Riegelverbindung reversibel gesperrte Montagerichtung der Spanneinheit beim Verbinden mit dem Anlagekörper orientiert ist.

Die Spanneinheit kann einen Werkzeugeingriff aufweisen, über welchen die erforderliche Energie zum Bereitstellen der Spannkraft auf die Spanneinheit übertragbar ist.

Gemäß einem Aspekt der Erfindung umschließen der mindestens eine Anlagekörper und die Spanneinheit das Bearbeitungswerkzeug jeweils abschnittsweise, insbesondere abwechselnd, insbesondere um eine parallel zu der Bearbeitungsrichtung orientierte Mittellängsachse des Bearbeitungswerkzeugs. Das Bearbeitungswerkzeug ist somit besonders sicher und zuverlässig an der Werkzeugmaschine befestigbar.

Die Befestigungseinrichtung ist vorzugsweise zum reversibel lösbaren Befestigen eines einzigen Bearbeitungswerkzeugs ausgebildet. Vorzugsweise ist zwischen dem Anlagekörper und der Spanneinheit genau ein Bearbeitungswerkzeug verspannbar. Die Befestigungseinrichtung kann alternativ zum Befestigen mehrerer Bearbeitungswerkzeuge an der Werkzeugmaschine ausgebildet sein.

Die Werkzeugmaschine ist vorzugsweise eine Pressvorrichtung, insbesondere eine Stanzvorrichtung und/oder Umformvorrichtung. Noch bevorzugter handelt es sich bei der Werkzeugmaschine um eine Revolvertanzpresse. Die Werkzeugmaschine umfasst vorzugsweise ein Werkzeugmagazin, insbesondere ein Revolvermagazin. Auf die Wirtschaftlichkeit einer derartigen Werkzeugmaschine im Betrieb wirkt sich die erfindungsgemäße Befestigungsvorrichtung besonders positiv aus.

Das mindestens eine Riegelelement kann beispielsweise ein Riegelbolzen und/oder eine Riegelplatte und/oder eine Passfeder sein. Das mindestens eine Riegelelement kann mit dem mindestens einen Riegeleingriff durch, insbesondere ausschließlich, lineares Verlagern und/oder Schwenken, insbesondere eine Schwenkbewegung von maximal 360°, insbesondere maximal 180°, in Eingriff gebracht werden. Vorzugsweise ist die Riegelverbindung derart ausgebildet, dass entlang einer genutzten Formschlussrichtung der Riegelverbindung wirkende Kräfte ausschließlich senkrecht zu einer Betätigungsrichtung des mindestens einen Riegelelements wirken. Unter der Betätigungsrichtung wird diejenige Richtung verstanden, in welche das mindestens eine Riegelelement zum Schließen der Riegelverbindung verlagert wird. Eine Schraubverbindung ist keine Riegelverbindung im Sinne der Offenbarung.

Vorzugsweise sind mindestens zwei, insbesondere sämtliche der Riegelelemente, insbesondere starr, miteinander verbunden. Gemäß einem Aspekt der Erfindung sind die mindestens zwei Riegelelemente an einem gemeinsamen Riegelträger, insbesondere formschlüssig, insbesondere mittels Fixierstiften, angebracht. Der Riegelträger kann dazu ausgebildet sein, anhand seiner Position relativ zu der Spanneinheit und/oder dem mindestens einen Anlagekörper, dem Benutzer anzuzeigen, ob sich die Riegelverbindung in einer Schließstellung befindet.

Die Spanneinheit kann zum Bereitstellen einer senkrecht zu der Bearbeitungsrichtung orientierten Spannkraft ausgebildet sein. Unter der Bearbeitungsrichtung wird eine Richtung verstanden, in der das Bearbeitungswerkzeug mit dem Werkstück zusammenwirkt, insbesondere eine Stanz- und/oder Umformrichtung. Vorzugsweise überlappt der mindestens eine Anlagekörper das Bearbeitungswerkzeug senkrecht zu einer Bearbeitungsrichtung zumindest teilweise, insbesondere vollständig. Das Verspannen des Bearbeitungswerkzeugs erfolgt vorzugsweise senkrecht zu der Bearbeitungsrichtung. Noch bevorzugter ist der mindestens eine Anlagekörper derart ausgebildet, dass das Bearbeitungswerkzeug parallel zu der Bearbeitungsrichtung und/oder in mindestens einer Richtung senkrecht zu der Bearbeitungsrichtung aus dem Anlagekörper entnehmbar ist. Vorteilhaft wird hierdurch erreicht, dass das Bearbeitungswerkzeug auch bei stark beschränkten Platzverhältnissen in handhabbarer Weise aus der Befestigungseinrichtung entnehmbar ist.

Vorzugsweise ist die Spanneinheit vollständig von dem Anlagekörper abnehmbar. Insbesondere kann die Spanneinheit entlang einer quer zu der Bearbeitungsrichtung orientierten und/oder parallel zu einer Spannrichtung orientierten Fügerichtung reversibel mit dem Anlagekörper verbindbar sein. Das Verbinden der Spanneinheit mit dem mindestens einen Anlagekörper kann durch unmittelbares Anbringen an dem Anlagekörper erfolgen oder über ein Zwischenelement. Vorzugsweise umschließt die Spanneinheit das Bearbeitungswerkzeug zusammen mit dem mindestens einen Anlagekörper in jeder Richtung quer zu der Bearbeitungsrichtung formschlüssig. Dieser Formschluss ist durch das reversible Entfernen der Spanneinheit von dem mindestens einen Anlagekörper vorzugsweise zumindest in einer Richtung aufhebbar. In einer Offenstellung ist das Bearbeitungswerkzeug damit quer zu der Bearbeitungsrichtung von dem Anlagekörper abnehmbar. Die Spanneinheit kann Bestandteil eines Klemmschuhs sein.

Gemäß einem weiteren Aspekt der Erfindung ist die Befestigungseinrichtung im Wesentlichen rotationssymmetrisch zu der Bearbeitungsrichtung ausgebildet. Vorzugsweise ergänzt die Spanneinheit den mindestens einen Anlagekörper zur Ausbildung der Rotationssymmetrie.

Gemäß einem Aspekt der Erfindung umfasst die Befestigungseinrichtung einen Befestigungsgrundkörper zum Verbinden des mindestens einen Anlagekörpers mit der Werkzeugmaschine, insbesondere dem Werkzeugmagazin. Vorzugsweise ist der mindestens eine Anlagekörper mit dem Befestigungsgrundkörper, insbesondere reversibel, formschlüssig und/oder kraftschlüssig verbindbar.

Insbesondere kann ein Betätigungsweg zum Schließen der Riegelverbindung besonders gering sein. Vorzugsweise beträgt ein Verhältnis zwischen einer Eingrifftiefe der vollständig geschlossenen Riegelverbindung entlang der Betätigungsrichtung und einer Eingriffbreite quer zu der Betätigungsrichtung maximal 10, insbesondere maximal 5, insbesondere maximal 3, insbesondere maximal 1. Die Eingrifftiefe und die Eingriffbreite beziehen sich auf einen Überlappungsbereich der Riegelverbindung in Richtung des genutzten Formschlusses, insbesondere quer zu der Betätigungsrichtung.

Eine Befestigungseinrichtung nach Anspruch 2 ist besonders einfach und zeiteffizient handhabbar. Dadurch, dass die Spanneinheit und/oder das mindestens eine Riegelelement und/oder der mindestens eine Riegeleingriff der Riegelverbindung verliersicher an dem Schließkörper angebracht sind, ist die Anzahl zu handhabender Bauteile reduziert. Insbesondere genügt es, ein einziges Bauteil, nämlich den Schließkörper, an den Anlagekörper heranzuführen. Der Schließkörper kann als Ringergänzungselement mit dem mindestens einen Anlagekörper zusammenwirken. Insbesondere ist der Schließkörper als Klemmschuh ausgebildet.

Vorzugsweise ist das mindestens eine Riegelelement verschiebbar an dem Schließkörper gelagert. Hierzu kann der Schließkörper mindestens eine Riegelelementlagerung, insbesondere mindestens eine Riegelelementbohrung, umfassen.

Eine Befestigungseinrichtung nach Anspruch 3 ist besonders einfach handhabbar und gewährleistet das Verspannen des Bearbeitungswerkzeugs mit dem Anlagekörper in besonders zuverlässiger Weise. Vorzugsweise ist mindestens ein Riegelelement zum rastenden Verbinden mit mindestens einem Riegeleingriff ausgebildet. Vorzugsweise weist das mindestens eine Riegelelement hierzu eine Rastfase auf. Mittels der Rastfase kann das Riegelelement zum rastenden Verbinden mit dem Riegeleingriff ohne separates Betätigen des Riegeleingriffs in eine Offenstellung verlagert werden. Durch die Ausbildung der Riegelverbindung als Rastverbindung kann ein unerwünschtes Lösen dieser Verbindung zuverlässig verhindert werden. Die Rastverbindung ist besonders robust gegenüber Vibrationsbewegungen in der Spannstellung anordenbar.

Vorzugsweise umfasst die Rastverbindung mindestens eine Riegelfeder zum Vorspannen des mindestens einen Riegelelements in die Schließstellung.

Die Befestigungseinrichtung gemäß der Erfindung ist im Betrieb besonders robust. Durch die Linearführung kann eine Fehlausrichtung der Spanneinheit gegenüber dem mindestens einen Anlagekörper zuverlässig verhindert werden. Dadurch, dass die Spanneinheit ausschließlich entlang der Fügerichtung verlagerbar ist, ist die Verbindung zwischen der Spanneinheit und dem mindestens einen Anlagekörper besonders starr und robust. Die Linearführung umfasst vorzugsweise zwei, insbesondere mindestens drei, insbesondere mindestens vier, Führungsauflager zwischen der Spanneinheit, insbesondere dem Schließkörper, und dem mindestens einen Anlagekörper. Vorzugsweise sind mindestens drei der Führungsauflager nicht kollinear zueinander angeordnet.

Gemäß einem Aspekt der Erfindung kann die Linearführung eine Nut-Feder-Verbindung und/oder eine Steckverbindung aufweisen. Eine derartige Befestigungseinrichtung ist besonders wirtschaftlich herstellbar und im Betrieb robust. Vorzugsweise umfasst die Nut-Feder-Verbindung eine, insbesondere mit dem mindestens einen Anlagekörper verbundene, T-förmige Nut und mindestens einen, insbesondere mit der Spanneinheit, insbesondere dem Schließkörper, verbundenen Nutstein. Eine Position des mindestens einen Nutsteins gegenüber der Spanneinheit, insbesondere dem Schließkörper, ist vorzugsweise quer zu der Fügerichtung der Nut-Feder-Verbindung einstellbar. Hierdurch wird erreicht, dass der Nutstein besonders spielfrei mit der Führungsnut verbindbar ist. Vorzugsweise ist die Nut-Feder-Verbindung als spielfreie Keil-Verbindung ausgebildet.

Die Steckverbindung umfasst vorzugsweise eine Führungsaussparung, insbesondere eine Führungsbohrung, und einen damit zusammenwirkenden Führungsschaft, insbesondere einen Führungsstift. Gemäß einem Aspekt der Erfindung umfasst die Linearführung genau zwei der Nut-FederVerbindungen und genau zwei der Steckverbindungen.

Eine Befestigungseinrichtung nach Anspruch 4 ist im Betrieb besonders robust und zuverlässig. Insbesondere gewährleistet das mindestens eine Federmittel einen Ausgleich von Schwankungen einer Spannabmessung des Bearbeitungswerkzeugs. Die Spannabmessung ist diejenige Abmessung des Bearbeitungswerkzeugs, welche sich zwischen dem mindestens einen Anlagekörper und der Spanneinheit bemisst. Die Befestigungseinrichtung ist damit besonders tolerant gegenüber variierenden Spannabmessungen, insbesondere aufgrund von Fertigungstoleranzen und/oder Verschleiß. Das mindestens eine Federmittel kann als Spiralfeder und/oder als Biegefeder, insbesondere als Blattfeder ausgebildet sein. Vorzugsweise umfasst die Spanneinheit mehrere der Federmittel.

Gemäß einem Aspekt der Erfindung kann das mindestens eine Federmittel mindestens ein federelastisches Festkörpergelenk zum Bereitstellen der Federwirkung aufweisen. Eine derartige Befestigungseinrichtung ist besonders bauraumsparend realisierbar. Das mindestens eine Festkörpergelenk kann besonders einfach in die Spanneinheit integriert werden. Vorzugsweise ist das mindestens eine Festkörpergelenk durch mindestens einen Schlitz in einem Klemmelement ausgebildet, über welches die Spannkraft auf das Bearbeitungswerkzeug übertragen wird. Zum Verbessern der Federwirkung und zur Reduktion von Spannungsspitzen mündet der mindestens eine Schlitz vorzugsweise jeweils in einer das Festkörpergelenk begrenzenden Bohrung.

Eine Befestigungseinrichtung nach Anspruch 5 gewährleistet eine besonders stabile Befestigung des Bearbeitungswerkzeugs. Durch die mindestens zwei Riegelelemente und/oder die mindestens zwei Klemmelemente kann ein Verkippen der Riegelverbindung um die Betätigungsrichtung der Riegelelemente und/oder ein Verlagern des Bearbeitungswerkzeugs in die Bearbeitungsrichtung zuverlässig verhindert werden. Das Bearbeitungswerkzeug wird zwischen den mindestens zwei Klemmelementen, welche von den mindestens zwei Riegelelementen gehalten werden, sicher und stabil umfasst.

Eine Befestigungseinrichtung nach Anspruch 6 ist besonders einfach betätigbar. Der Betätigungseingriff kann zum Drehantreiben und/oder zum linearen Antreiben der Spanneinheit ausgebildet sein. Beispielsweise kann der Betätigungseingriff als Werkzeugeingriff, insbesondere als Innen-Sechskant-Eingriff, oder als Handhebel oder als Handschieber, ausgebildet sein.

Eine Befestigungseinrichtung nach Anspruch 7 ist besonders kompakt realisierbar und ermöglicht das Aufbringen besonders hoher Spannkräfte. Vorzugsweise umfasst der Spannexzenterabschnitt mindestens eine, insbesondere mindestens zwei Exzenternocken. Über die Höhe der Exzenternocke gegenüber einer Exzenterbasis ist ein Übersetzungsverhältnis zwischen einem Betätigungsmoment und der resultierenden Spannkraft einstellbar. Vorzugsweise beträgt ein Verhältnis zwischen einem Spannradius der Exzenternocke zum Übertragen der Spannkraft in der Spannstellung und einem Öffnungsradius der Exzenterbasis zum Freigeben des Bearbeitungswerkzeugs höchstens 2, insbesondere höchstens 1,5, insbesondere höchstens 1,2, insbesondere höchstens 1,1, insbesondere höchstens 1,05. Hierdurch können besonders hohe Spannkräfte erzielt werden.

Gemäß einem Aspekt der Erfindung kann die Exzenterwelle einen Öffnungsexzenterabschnitt zum Verlagern der Riegelvorrichtung aus einer Spannstellung in eine Offenstellung aufweisen. Eine derartige Befestigungseinrichtung ist besonders kompakt realisierbar und einfach in der Handhabung. Vorzugsweise wirkt der Öffnungsexzenterabschnitt mit dem mindestens einen Riegelelement, insbesondere mit dem Riegelträger, zusammen. Gemäß einem weiteren Aspekt der Erfindung weist der Öffnungsexzenterabschnitt einen Drehanschlag zum Begrenzen einer Drehbewegung der Exzenterwelle auf. Der Drehanschlag wirkt vorzugsweise mit dem mindestens einen Anlagekörper zusammen.

Eine Befestigungseinrichtung nach Anspruch 8 ist besonders robust im Betrieb und gewährleistet das Befestigen des Bearbeitungswerkzeugs in besonders zuverlässiger Weise. Dadurch, dass die Spanneinheit in der Spannstellung, in der das Bearbeitungswerkzeug mit dem mindestens einen Anlagekörper verspannt ist die stabile Lage aufweist, ist die Spanneinheit nicht in die Offenstellung verlagerbar, ohne dass ein Mindestmaß an Energie zum Überwinden der stabilen Lage bereitgestellt werden muss. Auch unter Vibrationseinflüssen, wie sie insbesondere bei der Stanzbearbeitung in erheblichem Umfang auftreten, bleibt die Spanneinheit zuverlässig in der Spannstellung fixiert.

Gemäß einem Aspekt der Erfindung wird die stabile Lage der Spanneinheit durch die Formgebung des Spannexzenterabschnitts gewährleistet. Die Spannstellung der Exzenterwelle ist vorzugsweise zwischen einem Drehanschlag, insbesondere dem Drehanschlag des Öffnungsexzenterabschnitts, und einem Totpunkt der mindestens einen Exzenternocke ausgebildet. In dem Totpunkt hat der Radius des Spannexzenterabschnitts und damit die Spannkraft ein zumindest lokales Maximum. Insbesondere ist der Totpunktradius größer als der Spannradius.

Eine Befestigungseinrichtung nach Anspruch 9 ist besonders kompakt realisierbar. Das Umlenkmittel ist vorzugsweise um eine Umlenkachse drehbar gelagert. Die Umlenkachse kann parallel zu der Bearbeitungsrichtung orientiert sein. Eine antriebsseitige Bewegung wird mittels des Umlenkmittels vorzugsweise um mindestens 45°, insbesondere um mindestens 60°, insbesondere um mindestens 90°, insbesondere um mindestens 100°, in die Spannbewegung umgelenkt.

Gemäß einem Aspekt der Erfindung können das mindestens eine Umlenkmittel und das mindestens eine Federmittel einstückig ausgebildet sein. Eine derartige Befestigungseinrichtung ist besonders kompakt und wirtschaftlich realisierbar. Dadurch, dass das mindestens eine Umlenkmittel und das mindestens eine Federmittel einstückig, insbesondere integral, ausgebildet sind, kann der von diesen Komponenten beanspruchte Bauraum reduziert werden. Insbesondere kann die Lagerung und Anbindung des mindestens einen Umlenkmittels und des mindestens einen Federmittels vereinfacht werden. Vorzugsweise ist das mindestens eine Federmittel in Form von Festkörpergelenken in dem Umlenkmittel ausgebildet.

Gemäß einem weiteren Aspekt der Erfindung kann ein Linienkontaktkörper zum Antreiben des mindestens einen Umlenkmittels vorgesehen sein, welcher beim Verlagern der Spanneinheit aus einer Offenstellung in eine Spannstellung in Linienkontakt mit dem mindestens einen Umlenkmittel steht. Eine derartige Befestigungseinrichtung ist besonders verschleißfest. Vorzugsweise ist der Linienkontaktkörper an der Exzenterwelle, insbesondere zwischen der Exzenterwelle und dem Umlenkmittel, angeordnet. Eine Exzenterachse, um die die Exzenterwelle drehbar gelagert ist, ist vorzugsweise senkrecht zu einer Umlenkachse angeordnet, um welche das Umlenkmittel drehbar gelagert ist. Dadurch, dass zwischen der Exzenterachse und dem Umlenkmittel der Linienkontaktkörper angeordnet ist, kann erreicht werden, dass die Kraftübertragung zwischen der Exzenterwelle und dem Umlenkmittel über einen Linienkontakt erfolgt. Vorzugsweise erfolgt die Kraftübertragung innerhalb der Spanneinheit und gegenüber dem Bearbeitungswerkzeug ausschließlich über Linienkontakt und/oder Flächenkontakt. Dadurch, dass ein Punktkontakt bei der Übertragung der Spannkraft vermieden wird, ist die Befestigungseinrichtung erheblich verschleißresistenter.

Vorzugsweise ist der Linienkontaktkörper im Querschnitt rechteckförmig, insbesondere quaderförmig, ausgebildet. Gemäß einem Aspekt der Erfindung ist der Linienkontaktkörper schwimmend gelagert. Der Linienkontaktkörper kann aus einem Gleitlagermaterial, insbesondere aus Bronze, sein.

Eine Befestigungseinrichtung nach Anspruch 10 ist besonders einfach handhabbar und zuverlässig im Betrieb. Das Arretiermittel ist vorzugsweise zum formschlüssigen Fixieren der Spanneinheit in der Spannstellung und/oder der Offenstellung ausgebildet. Vorzugsweise umfasst das Arretiermittel eine Rastverbindung. Das Arretiermittel kann einen mit einer Federkraft vorgespannten Arretierkörper umfassen. Vorzugsweise ist das Arretiermittel als Druckstück ausgebildet.

Gemäß einem Aspekt der Erfindung kann die Befestigungseinrichtung mindestens eine Abdrückfeder zum Bewirken einer zwischen dem mindestens einen Anlagekörper und der Spanneinheit wirkenden Abdrückkraft aufweisen. Eine derartige Befestigungseinrichtung ist besonders einfach handhabbar. Die Abdrückfeder ist vorzugsweisen an dem mindestens einen Anlagekörper und/oder an dem Schließkörper ange-bracht. Vorzugsweise bewirkt die mindestens eine Abdrückfeder eine entgegen der Fügerichtung wirkende Abdrückkraft auf die Spanneinheit, insbesondere den Schließkörper.

Eine Befestigungseinrichtung nach Anspruch 11 ist besonders robust und wirtschaftlich betreibbar. Pressmatrizen sind im Betrieb besonders hohen statischen und dynamischen Lasten ausgesetzt. Gleichzeitig ist der Bauraum aufgrund zu vermeidender, langer Hubwege der damit zusammenwirkenden Pressstempel entlang der Bearbeitungsrichtung stark eingeschränkt. Die Befestigungseinrichtung gewährleistet ein besonders zuverlässiges Verspannen des Bearbeitungswerkzeugs, insbesondere bei dynamischen Lasten und ein einfaches Montieren des Bearbeitungswerkzeugs quer zu der Bearbeitungsrichtung. Zum Befestigen von Pressmatrizen ist die Befestigungseinrichtung demnach besonders vorteilhaft.

Eine weitere Aufgabe der Erfindung besteht darin, eine Werkzeuganordnung für eine Werkzeugmaschine zu schaffen, welche im Betrieb besonders wirtschaftlich und einfach zu handhaben ist.

Diese Aufgabe wird durch eine Werkzeuganordnung mit den Merkmalen des Anspruchs 12 gelöst. Die Vorteile der erfindungsgemäßen Werkzeuganordnung entsprechen den Vorteilen der vorstehend beschriebenen Befestigungseinrichtung. Die erfindungsgemäße Werkzeuganordnung ist besonders wirtschaftlich auswechselbar und instand zu halten. Eine mit dieser Werkzeuganordnung ausgestattet Werkzeugmaschine ist entsprechend wirtschaftlich betreibbar.

Eine weitere Aufgabe der Erfindung besteht darin, ein Werkzeugmagazin zu schaffen, welches besonders wirtschaftlich betreibbar ist.

Diese Aufgabe wird durch ein Werkzeugmagazin mit den Merkmalen des Anspruchs 13 gelöst. Die Vorteile des erfindungsgemäßen Werkzeugmagazins entsprechen den Vorteilen der vorstehend beschriebenen Werkzeuganordnung und der vorstehend beschriebenen Befestigungseinrichtung. Werkzeugmagazine sind zum Aufnehmen einer Vielzahl von Bearbeitungswerkzeugen ausgebildet. Das Werkzeugmagazin mit der erfindungsgemäßen Werkezuganordnung kann aufgrund der Vielzahl schnell und einfach austauschbarer Bearbeitungswerkzeuge besonders wirtschaftlich betrieben werden.

Gemäß einem Aspekt der Erfindung kann der Magazingrundkörper als Werkzeugrevolver ausgebildet sein. Ein derartiges Werkzeugmagazin ist besonders wirtschaftlich betreibbar. Dadurch, dass der Magazingrundkörper als Werkzeugrevolver ausgebildet ist, steht zur Montage des Bearbeitungswerkzeugs ein sehr begrenzter Bauraum zur Verfügung. Insbesondere kann das Bearbeitungswerkzeug nicht entlang der Bearbeitungsrichtung an den mindestens einen Anlagekörper herangeführt werden. Das Werkzeugmagazin mit der erfindungsgemäßen Werkzeuganordnung ermöglicht das Einsetzen des Bearbeitungswerkzeugs quer zu der Bearbeitungsrichtung. Somit kann eine Montage des Bearbeitungswerkzeugs auch in dem von dem Werkzeugrevolver stark begrenzten Montageraum auf einfache Weise erfolgen.

Der Erfindung liegt ferner die Aufgabe zugrunde, ein Verfahren zum Betreiben einer Werkzeugmaschine zu schaffen, welches besonders robust und wirtschaftlich ist.

Diese Aufgabe wird durch ein Verfahren mit den Merkmalen des Anspruchs 14 gelöst. Die Vorteile des erfindungsgemäßen Verfahrens entsprechen den Vorteilen des bereits beschriebenen Werkzeugmagazins, der Werkzeuganordnung und der Befestigungseinrichtung. Das Schließen der Riegelverbindung erfolgt vorzugsweise durch eine Linearbewegung und/oder eine Schwenkbewegung. Hierdurch wird vorteilhaft erreicht, dass das Verbinden der Spanneinheit mit dem mindestens einen Anlagekörper besonders zeiteffizient erfolgen kann, wodurch der Betrieb der Werkzeugmaschine besonders wirtschaftlich ist.

Weitere Merkmale, Vorteile und Einzelheiten der Erfindung ergeben sich aus der nachfolgenden Beschreibung eines Ausführungsbeispiels. Es zeigt:
- Fig. 1: eine schematische Seitenansicht einer Werkzeugmaschine mit einem Werkzeugmagazin, welches mehrere Werkzeuganordnungen mit jeweils einem Bearbeitungswerkzeug zum Bearbeiten eines Werkstücks aufweist,
- Fig. 2: eine Explosionsdarstellung der Werkzeuganordnung in Fig. 1 mit dem Bearbeitungswerkzeug und einer Befestigungseinrichtung zum Verbinden des Bearbeitungswerkzeugs mit dem Magazingrundkörper,
- Fig. 3: eine Vorderansicht der Werkzeuganordnung in Fig. 1, wobei eine Spanneinheit und eine Riegelverbindung der Befestigungseinrichtung in einer Offenstellung angeordnet sind,
- Fig. 4: eine Draufsicht auf die Werkzeuganordnung in Fig. 1,
- Fig. 5: eine Detaildarstellung der Spanneinheit und der Riegelverbindung gemäß dem Ausschnitt V in Fig. 4, wobei verdeckte Kanten mit gestrichelten Linien dargestellt sind und wobei die Spanneinheit eine Exzenterwelle aufweist, welche über zwei Klemmelemente auf das Bearbeitungswerkzeug wirkt,
- Fig. 6: eine Rückansicht der Exzenterwelle in Fig. 5, wobei die Exzenterwelle einen Lagerabschnitt, einen Spannexzenterabschnitt und einen Öffnungsexzenterabschnitt umfasst,
- Fig. 7: eine Unteransicht der Exzenterwelle in Fig. 5,
- Fig. 8: eine Vorderansicht der Exzenterwelle in Fig. 5 mit einem Betätigungseingriff zum Verlagern der Befestigungseinrichtung zwischen einer Spannstellung und einer Offenstellung,
- Fig. 9: eine Schnittdarstellung der Exzenterwelle entlang der Schnittlinie IX-IX in Fig. 8 mit einem Arretiermitteleingriff zum Fixieren der Spanneinheit in der Spannstellung.

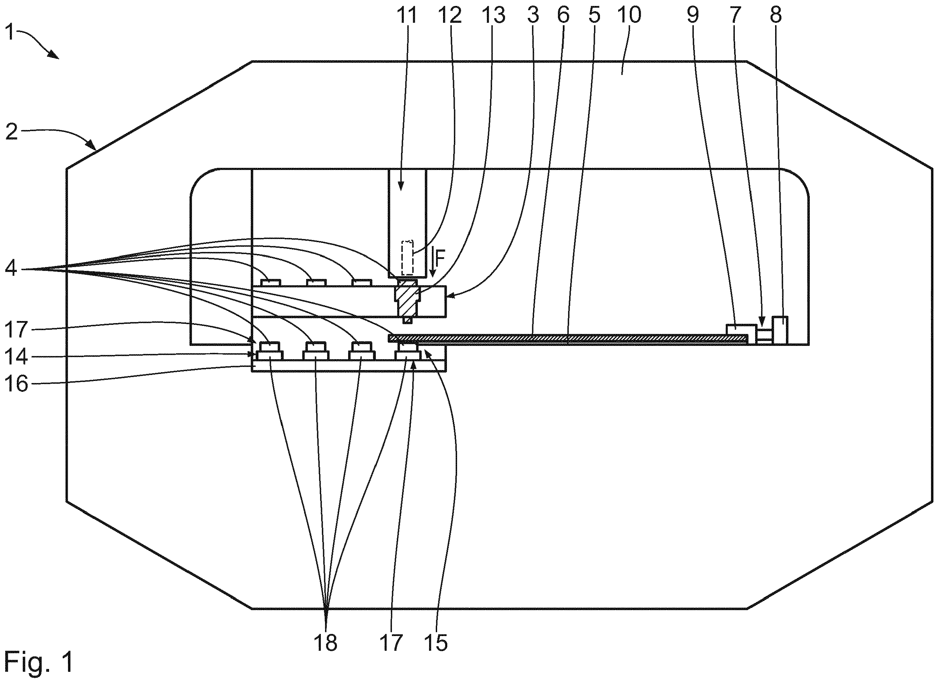

In der Fig. 1 ist eine Werkzeugmaschine 1 dargestellt mit einer Rahmenstruktur 2, einem damit verbundenen Werkzeugmagazin 3 mit mehreren Bearbeitungswerkzeugen 4, eine Bearbeitungstisch 5 zum Tragen eines zu bearbeitenden Werkstücks 6 und einer Positioniereinrichtung 7 zum Verlagern des Werkstücks 6 relativ zu dem Bearbeitungstisch 5. Das Werkstück 6 ist ein Blech, insbesondere ein Metallblech. Die Positioniereinrichtung 7 umfasst einen Positionierantrieb 8, welcher mit einem Spannmittel 9 in Verbindung steht. Das Werkstück 6 ist an dem Spannmittel 9 reversibel befestigt und mittels des Positionierantriebs 8 relativ zu dem Bearbeitungstisch 5 verlagerbar.

An einem Rahmenoberteil 10 der Rahmenstruktur 2 ist eine Betätigungseinrichtung 11 angeordnet. Die Betätigungseinrichtung 11 umfasst einen Stößel 12 zum Antreiben eines unterhalb des Stößels 12 angeordneten Bearbeitungswerkzeugs 4, welches als Stanzstempel 13 ausgebildet ist. An dem Werkzeugmagazin 3 ist ein als Stanzmatrize 14 ausgebildetes Bearbeitungswerkzeug 4 angeordnet. Die Stanzmatrize 14 ist mit Hinblick auf das Werkstück 6 dem Stanzstempel 13 gegenüberliegend angeordnet. Der Stanzstempel 13 und die Stanzmatrize 14 wirken beim Bearbeiten des Werkstücks 6 als Werkzeugpaar 15 zusammen.

An einem Magazingrundkörper 16 des Werkzeugmagazins 3 sind mehrere Werkzeuganordnungen 17 angebracht. Die Werkzeuganordnungen 17 umfassen jeweils eine der Stanzmatrizen 14 sowie eine Befestigungseinrichtung 18 zum Verbinden der Stanzmatrize 14 mit dem Magazingrundkörper 16 der Werkzeugmaschine 1.

Das Werkzeugmagazin 3 ist mit der Rahmenstruktur 2 drehantreibbar verbunden. Das aktive Werkzeugpaar 15 ist aus mehreren der an dem Werkzeugmagazin 3 angeordneten Werkzeugpaare 15 auswählbar und durch Drehantreiben des Werkzeugmagazins 3 in vertikaler Richtung unterhalb des Stößels 12 zum Bearbeiten des Werkstücks 6 positionierbar.

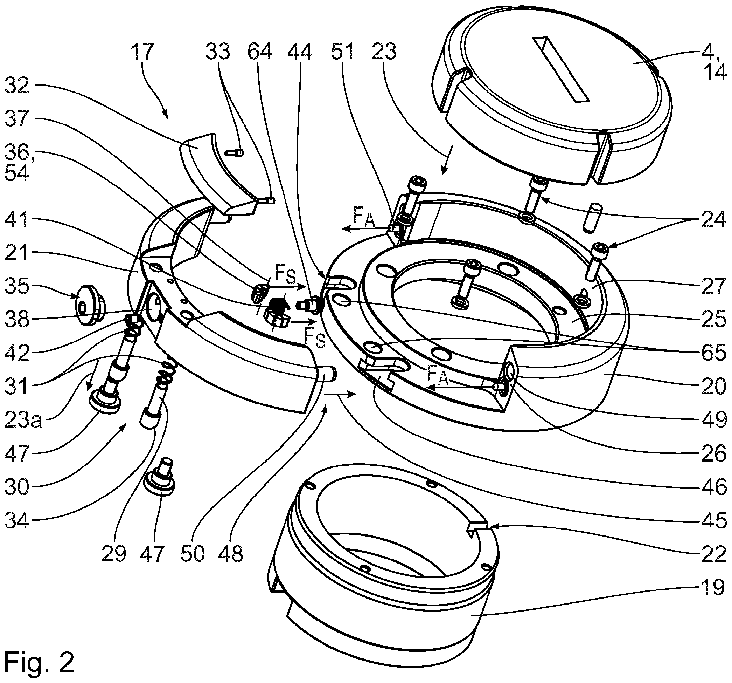

In der Fig. 2 ist eine der Werkzeuganordnungen 17 weiter im Detail dargestellt. Die Werkzeuganordnung 17 umfasst die Befestigungseinrichtung zum Befestigen des als Stanzmatrize 14 ausgebildeten Bearbeitungswerkzeugs 4 an der als Pressvorrichtung, insbesondere als Revolverstanzpresse, ausgebildeten Werkzeugmaschine 1. Die Befestigungseinrichtung 18 weist hierzu einen Befestigungsgrundkörper 19, einen daran angebrachten Anlagekörper 20 und einen reversibel mit dem Anlagekörper 20 verbindbaren Schließkörper 21 auf. Der Befestigungsgrundkörper 19 ist an dem Magazingrundkörper 16 drehbar gelagert und mittels eines nicht dargestellten Maschinenantriebs relativ zu diesem drehantreibbar. Der Anlagekörper 20 ist drehfest mit dem Befestigungsgrundkörper 19 verbunden. Eine Grundkörperverbindung zwischen dem Befestigungsgrundkörper 19 und dem Anlagekörper 20 umfasst eine als Nut-Feder-Verbindung 22 ausgebildete Formschlussverbindung zum drehfesten Verbinden des Befestigungsgrundkörpers 19 mit dem Anlagekörper 20 um eine Bearbeitungsrichtung 23. Die Bearbeitungsrichtung 23 ist parallel zu einer Wirkrichtung des Stößels 3 orientiert. Ferner umfasst die Grundkörperverbindung mehrere Schraubverbindungen 24.

Der Anlagekörper 20 hat einen Basisflansch 25 und einen damit verbundenen, bogenförmigen Anlagekragen 26. Die Schraubverbindungen 24 erstrecken sich durch den Basisflansch 25. Der Anlagekragen 26 bildet eine Kontaktfläche 27 zum Verspannen mit dem Bearbeitungswerkzeug 3 aus.

Mit dem Schließkörper 21 sind eine Spanneinheit 28 und zwei Riegelelemente 29 einer Riegelverbindung 30 verliersicher angebracht. Die Riegelelemente 29 sind entlang einer zu der Bearbeitungsrichtung 23 parallelen Betätigungsrichtung 23a verschiebbar an dem Schließkörper 21 gelagert. Mittels Riegelfedern 31 sind die Riegelelemente 29 in Richtung des Anlagekörpers 20 vorgespannt. Die Riegelelemente 29 sind an einem Riegelträger 32 angebracht. Der Riegelträger 32 wirkt als Anschlag mit dem Schließkörper 21 zusammen und begrenzt die Verschiebbarkeit der Riegelelemente 29 entlang der Betätigungsrichtung 23a. An dem Riegelträger 32 sind die Riegelelemente 29 mittels senkrecht zu der Betätigungsrichtung 23a orientierten Fixierstiften 33 angebracht.

In einem Offenzustand der Riegelverbindung 30 ist der Riegelträger 32 beabstandet zu dem Schließkörper 21 angeordnet. In einem Spannzustand der Riegelverbindung 30 kontaktiert der Riegelträger 32 den Schließkörper 21.

Die Riegelelemente 29 weisen Rastfasen 34 auf. Die Rastfasen 34 gewährleisten ein rastendes Schließen der Riegelverbindung 30 zum Verbinden der Spanneinheit 28 mit dem Anlagekörper 20. Der Riegelträger 32 ist als bogenförmige Leiste ausgebildet, welche zusammen mit dem Schließkörper 21 und dem Anlagekörper 20 eine um die Betätigungsrichtung 23 im Wesentlichen rotationssymmetrische Einheit ausbildet.

Die Spanneinheit 28 umfasst eine Exzenterwelle 35 und zwei damit zusammenwirkende Klemmelemente 36. Die Klemmelemente 36 sind jeweils um eine parallel zu der Betätigungsrichtung 23 orientierte Umlenkachse 37 drehbar gelagert. Durch eine Drehung der Klemmelemente 36 um die Umlenkachse 37 sind diese zwischen der Spannstellung, in welcher das Bearbeitungswerkzeug 4 gegen den Anlagekörper 20 verspannt ist, und einer Ausraststellung, in der das Bearbeitungswerkzeug 4 freigegeben ist, verlagerbar. Eine von den Klemmelementen 36 übertragene Spannkraft Fs ist senkrecht zu der Betätigungsrichtung 23.

Die Exzenterwelle 35 ist drehbar in einer Wellenbohrung 38 des Schließkörpers 21 gelagert. Mit den beiden Klemmelementen 36 wirkt die Exzenterwelle 35 über einen Spannexzenterabschnitt 39 zusammen. Die Exzenterwelle 35 umfasst einen Betätigungseingriff 40, welcher als Formschlussprofil, insbesondere als Innen-Sechskant-Profil, ausgebildet ist. Durch Drehantreiben der Exzenterwelle 35 über den Betätigungseingriff 40 sind über die Klemmelemente 36 die Spannkräfte Fs auf das Bearbeitungswerkzeug 4 aufbringbar.

Die Spanneinheit 28 umfasst ferner eine mit der Exzenterwelle 35 wirkverbundene Drehfeder 41. Die Drehfeder 41 ist als Schenkelfeder ausgebildet und spannt die Exzenterwelle 35 in Richtung der Spannstellung vor.

Ferner umfasst die Spanneinheit 28 ein Arretiermittel 42 zum Fixieren der Exzenterwelle 35 in der Spannstellung oder in der Offenstellung. Das Arretiermittel 42 ist als Druckstück ausgebildet. Das Arretiermittel 42 wirkt in der Spannstellung oder in der Offenstellung jeweils mit einem Arretiermitteleingriff 43 der Exzenterwelle 35 zusammen.

Die Befestigungseinrichtung 18 umfasst eine Linearführung 44 zum Beschränken der Verlagerbarkeit der Spanneinheit 28 relativ zu dem Anlagekörper 20 entlang einer Fügerichtung 45. Die Fügerichtung 45 ist im Wesentlichen parallel zu der Spannkraft Fs orientiert. Die Linearführung 44 umfasst zwei in dem Anlagekörper 20, insbesondere in dem Basisflansch 25, angelegte T-förmige Führungsnuten 46. An dem Schließkörper 21 sind zwei Nutsteine 47 der Linearführung 44 zum formschlüssigen Zusammenwirken mit den Führungsnuten 46 angebracht. Die Linearführung 46 umfasst eine Steckverbindung 48 mit Führungsbohrungen 49 in dem Anlagekragen 26 und darin einsteckbare Führungsstifte 50 an dem Schließkörper 21.

Die Befestigungseinrichtung 18 weist ferner zwei Abdrückfedern 51 auf. Die Abdrückfedern 51 bewirken Abdrückkräfte F_{A} zwischen dem Schließkörper 21 und dem Anlagekörper 20 zum Verlagern des Schließkörpers 21 gegenüber dem Anlagekörper 20 entgegen der Fügerichtung 45. Die Abdrückfedern 51 sind an dem Anlagekörper 20 angebracht, insbesondere in den Anlagekragen 26 eingebracht.

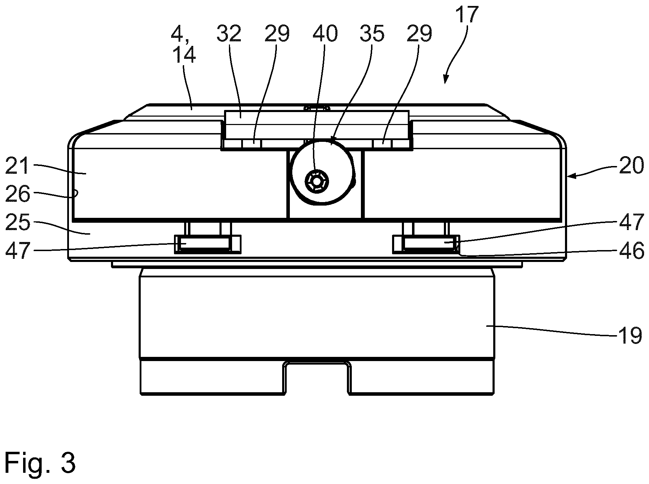

In der Fig. 3 ist die Werkzeuganordnung 17 in einer Vorderansicht dargestellt. Der Schließkörper 21 ist entlang der Fügerichtung 45 verschoben und der Schließkörper 21 steht in Kontakt mit dem Anlagekragen 26. Die Nutsteine 47 stehen in Eingriff mit den Führungsnuten 46 und die Führungsstifte 50 stehen in Eingriff mit dem Führungsbohrungen 49. Der Riegelträger 32 und die damit verbundenen Riegelelemente 29 sind in der Ausraststellung angeordnet.

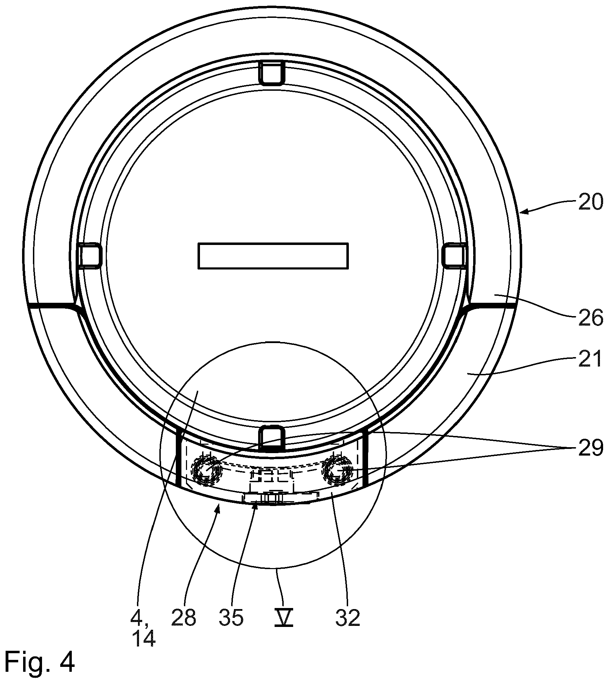

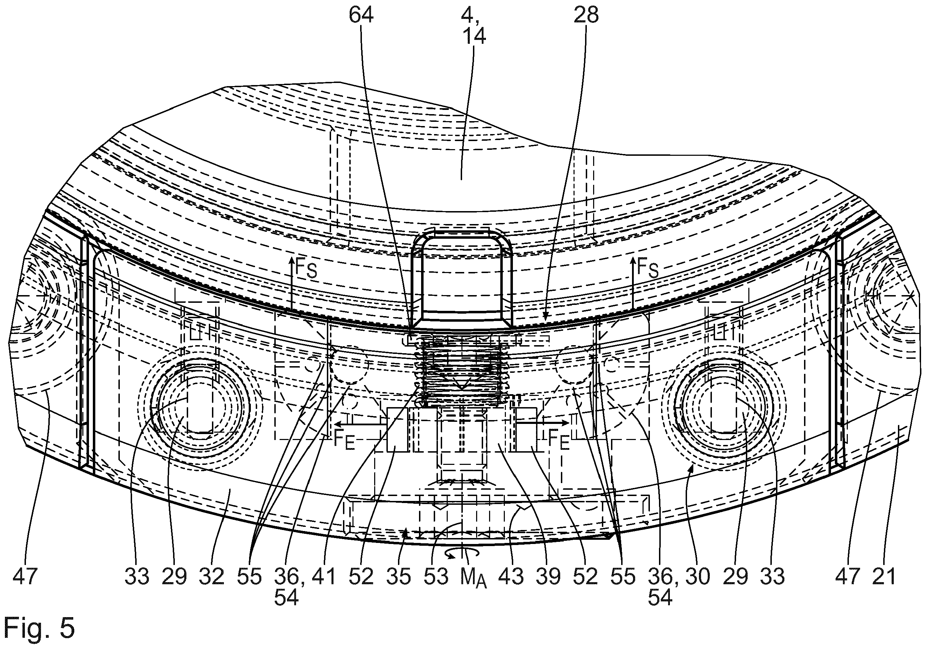

In den Fig. 4 und Fig. 5 ist die Spanneinheit 28 weiter im Detail dargestellt. Die Riegelverbindung 30 ist in die Schließstellung verlagert und die Exzenterwelle 35 befindet sich in der Spannstellung. Der Spannexzenterabschnitt 39 der Exzenterwelle 35 wirkt über jeweils einen Linienkontaktkörper 52 auf das jeweilige Klemmelement 36. Die Linienkontaktkörper 52 sind als im Querschnitt rechteckförmige Leisten ausgebildet und aus einem Gleitlagermaterial, insbesondere aus Bronze, hergestellt.

Die Exzenterwelle 35 ist zum Wandeln eines Antriebsmoments M_{A} in senkrecht zu einer Exzenterachse 53 orientierte Exzenterkräfte F_{E} ausgebildet. Die Exzenterkräfte F_{E} sind im Wesentlichen senkrecht zu den Spannkräften Fs orientiert. Die Klemmelemente 36 sind als Umlenkmittel 54 zum Umlenken der Exzenterkräfte F_{E} zum Erzeugen der Spannkräfte Fs ausgebildet. Hierzu sind die Klemmelemente 36 wie vorstehend beschrieben, um die Umlenkachsen 37 drehbar gelagert.

Die Klemmelemente 36 umfassen Federmittel 55 zum federnden Übertragen der Spannkräfte Fs auf das Bearbeitungswerkzeug 4. Die Federmittel 55 sind als Biegefedern, insbesondere in Form von Festkörpergelenken, ausgebildet. Jedes der Klemmelemente 36 umfasst drei der Federmittel 55. Insbesondere sind die Klemmelemente 36 zum Erwirken der Federwirkung geschlitzt ausgebildet, wobei zum Begünstigen der Federwirkung und zur Reduktion von Spannungsspitzen ein Schnittgrund des jeweiligen Schlitzes aufgebohrt ist.

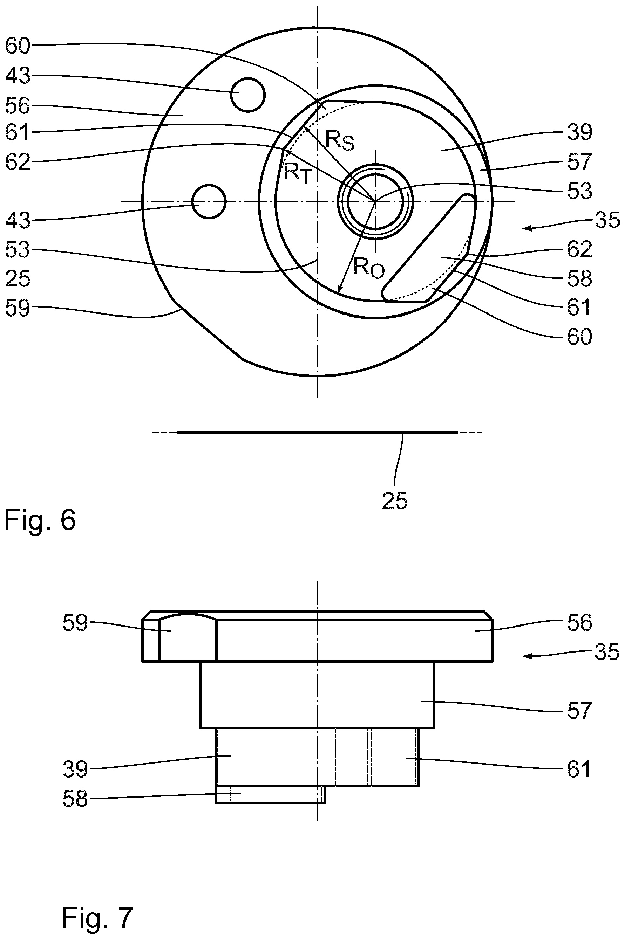

In den Fig. 6 bis F. 9 ist die Exzenterwelle 35 weiter im Detail dargestellt. Die Exzenterwelle 35 umfasst nacheinander folgend einen Öffnungsexzenterabschnitt 56, einen Lagerabschnitt 57 zum drehbaren Lagern der Exzenterwelle 35 an der Wellenbohrung 38, den Spannexzenterabschnitt 39 und einen Drehfedereingriff 58 zum drehfesten Verbinden mit der Drehfeder 41 um die Exzenterachse 53.

Die Exzenterwelle 35 umfasst einen Drehanschlag 59. Der Drehanschlag 59 ist an dem Öffnungsexzenterabschnitt 56 angeordnet. In der Spannstellung gelangt der Drehanschlag 59 in Kontakt mit dem Basisflansch 25 und verhindert ein Überdrehen der Exzenterwelle 35 über die Spannstellung hinaus.

Der Spannexzenterabschnitt 39 umfasst zwei Exzenternocken 60. Ein Spannradius Rs in einem Spannbereich 61 der jeweiligen Exzenternocke 60 ist größer als ein Öffnungsradius Ro des Spannexzenterabschnitts 39 mit Bezug auf die Exzenterachse 53. Ein Totpunktradius R_{T} eines Totpunkts 62 ist wiederum größer als der Spannradius Rs. In der Spannstellung steht der Spannbereich 61 in Kontakt mit dem Linienkontaktkörper 52. Dadurch, dass der Öffnungsradius R_{O} größer ist als der Spannradius Rs, ist beim Verlagern der Exzenterwelle 35 zwischen der Spannstellung und der Offenstellung ein Energieberg zu überwinden. Die Spannstellung stellt somit eine stabile Lage der Exzenterwelle 35 dar.

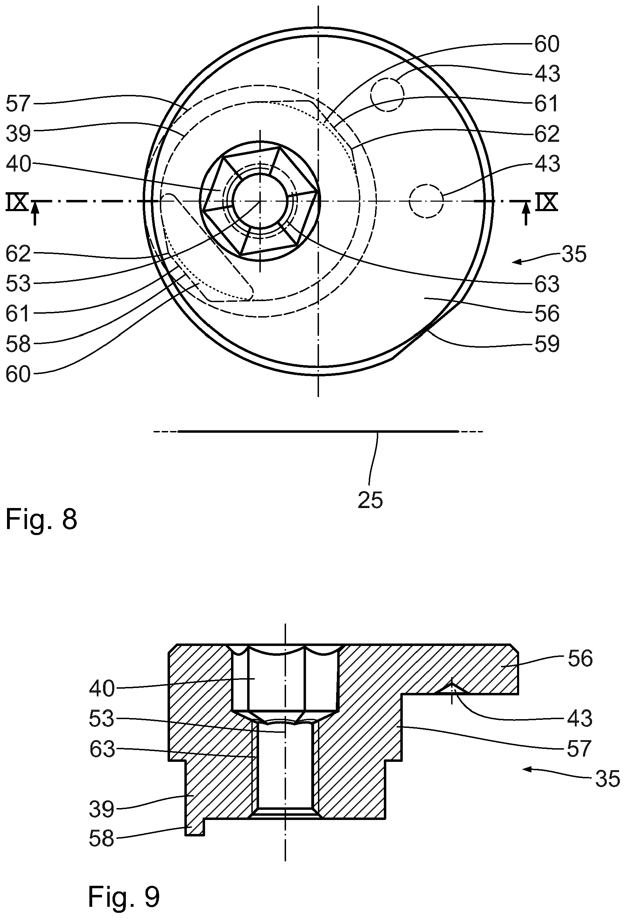

In der Fig. 9 ist die Exzenterwelle 35 geschnitten dargestellt. Ein Gewinde 63 dient zum Befestigen der Exzenterwelle 35 an dem Schließkörper 21 mittels einer Verbindungsschraube 64. An einem Schraubenschaft der Verbindungsschraube 64 ist die Drehfeder 41 drehbar gelagert.

Die Funktionsweise der Werkzeugmaschine 1, des Werkzeugmagazins 3, der Werkzeuganordnung 17 und der Befestigungseinrichtung 18 ist wie folgt:
Der Anlagekörper 20 ist über den Befestigungsgrundkörper 19 drehfest mit dem Magazingrundkörper 16 verbunden. Der Schließkörper 21 ist von dem Anlagekörper 20 abgenommen. Die Spanneinheit 28 befindet sich in der Offenstellung. Die Federmittel 55 sind entspannt und das Arretiermittel 42 greift in einen der Arretiermitteleingriffe 43 ein.

Die Stanzmatrize 14 wird von der Seite, insbesondere entlang der Fügerichtung 45 in den Anlagekörper 20 eingesetzt. Die Stanzmatrize 14 liegt an der Kontaktfläche 27 an. Durch das seitliche Einsetzen des Bearbeitungswerkzeugs 4 wird erreicht, dass das Einrüsten des Bearbeitungswerkzeugs auch dann möglich ist, wenn in vertikaler Richtung nicht genügend Bauraum für eine vertikale Einrüstung zur Verfügung steht.

Der Schließkörper 21 wird geführt von der Linearführung 44 entlang der Fügerichtung 45 in Richtung des Anlagekörpers 26 verlagert. Die Nutsteine 47 greifen dabei in die Führungsnuten 46 ein und die Führungsstifte 50 greifen in die Führungsbohrungen 49 ein.

Die Rastfasen 34 gelangen in Kontakt mit dem Befestigungskörper 19. Das Weiterverlagern des Schließkörpers 21 in Fügerichtung 45 bewirkt ein Verlagern der Riegelelemente 29 in die Ausraststellung, insbesondere entgegen der Betätigungsrichtung 23. Die Riegelfedern 31 werden gespannt. Der Riegelträger 32 gelangt außer Kontakt mit dem Schließkörper 21 und wird nach oben angehoben. Die Abdrückfedern 51 gelangen in Kontakt mit dem Schließkörper 21 und werden gespannt.

Die Riegelelemente 29 gelangen in einer Draufsicht, insbesondere entlang der Betätigungsrichtung 23 in Überdeckung mit Riegelbohrungen 65 in dem Anlagekörper 20, insbesondere in dem Befestigungsgrundkörper 19. Die Riegelelemente 29 rasten in die Riegelbohrungen 65 ein. Hierbei werden die Riegelelemente 29 mittels der Riegelfedern 31 zusammen mit dem Riegelträger 32 entlang der Betätigungsrichtung 23a verlagert. Der Riegelträger 32 gelangt in Kontakt mit dem Schließkörper 21. Die Riegelverbindung 30 befindet sich in der Schließstellung. Eine Oberkante des Riegelträgers 32 ist bündig zu einer Oberkante des Schließkörpers 21 angeordnet. Diese Anordnung zeigt dem Benutzer an, dass sich die Riegelverbindung 30 in der Schließstellung befindet.

Ein Betätigungswerkzeug, insbesondere ein Inbusschlüssel, wird in Eingriff mit dem Betätigungseingriff 40 gebracht. Über den Betätigungseingriff 40 wird ein Antriebsmoment M_{A} auf die Exzenterwelle 35 übertragen, wodurch die Exzenterwelle 35 gedreht wird. Der jeweilige Linienkontaktkörper 52 gelangt in Kontakt mit dem jeweiligen Exzenternocken 60. Hierdurch werden die Exzenterkräfte F_{E} auf den Linienkontaktkörper 52 übertragen. Über die Umlenkmittel 54 wird die jeweilige Exzenterkraft F_{E} in die Spannkraft Fs gewandelt. Dabei wird die Spannkraft Fs über die Umlenkmittel 54 übertragen und die Federmittel 55 werden gespannt.

Der Linienkontaktkörper 52 gelangt in Kontakt mit dem Totpunkt 62. Die maximale Spannkraft Fs ist erreicht. Beim Weiterdrehen der Exzenterwelle 35 gelangt der Linienkontaktkörper 52 in Kontakt mit dem Spannbereich 61. Hierbei wird die Spannkraft Fs leicht reduziert und die Exzenterwelle 35 befindet sich in einer stabilen Lage. Die Spannstellung ist erreicht.

Der Drehanschlag 59 befindet sich in Kontakt mit dem Befestigungsgrundkörper 19. Ein Weiterdrehen der Exzenterwelle 35 wird hierdurch verhindert. Insbesondere wird die Exzenterwelle 35 durch den Totpunkt 62 und den Drehanschlag 59 in der Spannstellung fixiert.

Die Stanzmatrize 14 ist mittels der Spannkraft Fs mit dem Anlagekörper 20 verspannt. Die Stanzmatrize 14 kann zum Bearbeiten eines Werkstücks 6 verwendet werden. Die Exzenterwelle 35 wird zusätzlich mittels des Arretiermittels 42 in der Spannstellung gesichert, welches in Eingriff mit dem Arretiermitteleingriff 43 der Exzenterwelle 35 steht.

Das Werkstück 6 wird auf dem Bearbeitungstisch 5 angeordnet und mit dem Spannmittel 9 verbunden. Das Werkzeugpaar 15 wird unterhalb des Stößels 12 angeordnet und das Werkstück 6 wird von dem Werkzeugpaar 15, angetrieben von der Betätigungseinrichtung 11, bearbeitet.

Zum Entnehmen der Stanzmatrize 14 aus der Befestigungseinrichtung 18 wird die Exzenterwelle 35 mittels des Betätigungswerkzeugs über den Betätigungseingriff durch Aufbringen eines entgegengesetzten Antriebsmoments M_{A} in die Offenstellung verlagert. Mittels des eingebrachten Antriebsmoments M_{A} wird die Exzenterwelle 35 gedreht, wobei der Totpunkt 62 überwunden wird. Der Linienkontaktkörper 52 wird in den Bereich des Öffnungsradius Ro verlagert und die Federmittel 55 werden entspannt. Die Stanzmatrize 14 ist frei von Spannkräften Fs. Die Spanneinheit 28 befindet sich in der Offenstellung. Das Arretiermittel 42 greift zum Sichern der Offenstellung in den zugehörigen Arretiermitteleingriff 43 ein.

Zum Lösen der Riegelverbindung 30 wird die Exzenterwelle 35 weitergedreht. Die Drehfeder 41 wird gespannt. Der Öffnungsexzenterabschnitt 56 gelangt in Kontakt mit dem Riegelträger 32. Das Weiterdrehen der Exzenterwelle 35 bewirkt ein Anheben des Riegelträgers 32 zusammen mit den Riegelelemente 29. Die Riegelverbindung 30 befindet sich der Ausraststellung. Die Riegelelemente 29 gelangen außer Eingriff mit den Riegelbohrungen 65.

Die von den Abdrückfedern 51 bereitgestellten Abdrückkräfte F_{A} bewirken ein Verlagern des Schließkörpers 21 entgegen der Fügerichtung 45. Die Riegelelemente 29 gelangen außer Deckung mit den Riegelbohrungen 65 entlang der Betätigungsrichtung 23a. Das Betätigungswerkzeug kann aus dem Betätigungseingriff 40 entnommen werden. Der Schließkörper 21 wird entlang der Linearführung 45 von dem Anlagekörper 20 getrennt. Die Drehfeder 41 bewirkt ein Verlagern der Exzenterwelle 35 zurück in die Offenstellung und das Arretiermittel 42 sichert die Exzenterwelle 35 in der Offenstellung.

Die Stanzmatrize 14 kann aus der Befestigungseinrichtung 18 entnommen werden. Die Werkzeugmaschine 1 befindet sich wieder in der Ausgangsstellung. Die Befestigungseinrichtung 18 steht wieder zum Einrüsten einer Stanzmatrize 14 bereit.

Das erfindungsgemäße Werkzeugmagazin 3, die Werkzeuganordnung 17 bzw. die Befestigungseinrichtung 18 gewährleisten vorteilhaft, dass das Bearbeitungswerkzeug 4 auf besonders einfache und effiziente Weise in die Werkzeugmaschine 1 eingerüstet werden kann. Dadurch, dass die Spanneinheit 28 mittels einer Riegelverbindung 30 mit dem Anlagekörper 20 verbunden wird, kann das Bearbeitungswerkzeug 4 besonders zeiteffizient mit der Werkzeugmaschine 1 verbunden werden. Die Ausbildung der Riegelverbindung 30 als Rastverbindung gewährleistet eine besonders einfache Befestigung des Bearbeitungswerkzeugs 4 an der Werkzeugmaschine 1, insbesondere mit nur einer Hand. Das Lösen der Riegelverbindung 30 mittels der Exzenterwelle 35 sowie das Verlagern des Schließkörpers 21 in eine von dem Anlagekörper 20 beabstandete Position mittels der Abdrückfedern 51, erleichtern die Handhabbarkeit der Befestigungseinrichtung 18 zusätzlich. Das erfindungsgemäße Werkzeugmagazin 3, die Werkzeuganordnung 17 und die Befestigungseinrichtung 18 gewährleisten einen besonders zeiteffizienten Wechsel von Bearbeitungswerkzeugen 4, eine besonders zuverlässige Verbindung des Bearbeitungswerkzeugs 4 mit der Werkzeugmaschine 1 und damit den wirtschaftlichen Betrieb der Werkzeugmaschine 1.

## Patentansprüche

1. Befestigungseinrichtung (18) zum Befestigen eines Bearbeitungswerkzeugs (4, 14) an einer Werkzeugmaschine (1), insbesondere an einer Pressvorrichtung, aufweisend
- mindestens einen Anlagekörper (20) gegen den das Bearbeitungswerkzeug (4, 14) spannbar ist,
- eine Spanneinheit (28) zum Bereitstellen einer Spannkraft (F_{A}) zum lösbaren Verspannen des Bearbeitungswerkzeugs (4, 14) gegen den mindestens einen Anlagekörper (20), und
- eine Riegelverbindung (30) zum lösbaren Verbinden der Spanneinheit (28) mit dem mindestens einen Anlagekörper (20)
**gekennzeichnet, durch**
eine Linearführung (44) zum Beschränken der Verlagerbarkeit der Spanneinheit (28) relativ zu dem mindestens einen Anlagekörper (20) entlang einer Fügerichtung (45), wobei die Spanneinheit (28) und die Riegelverbindung (30) derart ausgebildet sind, dass das Bereitstellen der Spannkraft (F_{A}) und das Verbinden der Spanneinheit (28) mit dem mindestens einen Anlagekörper derart unabhängig voneinander erfolgen, dass zum Verbinden der Spanneinheit (28) mit dem mindestens einen Anlagekörper (20) die Spannkraft (F_{A}) nicht überwunden werden muss.

2. Befestigungseinrichtung (18) nach Anspruch 1, **dadurch gekennzeichnet, dass** die Spanneinheit (28) und mindestens ein Riegelelement (29) der Riegelverbindung (30) und/oder mindestens ein Riegeleingriff (65) der Riegelverbindung (30) an einem Schließkörper (21) angebracht sind.

3. Befestigungseinrichtung (18) nach Anspruch 1 oder 2, **dadurch gekennzeichnet, dass** die Riegelverbindung (30) eine Rastverbindung zum rastenden Verbinden der Spanneinheit (28) mit dem mindestens einen Anlagekörper (20) umfasst.

4. Befestigungseinrichtung (18) nach einem der vorstehenden Ansprüche, **dadurch gekennzeichnet, dass** die Spanneinheit (28) mindestens ein Federmittel (55) aufweist, über welches eine Spannkraft (Fs) zum Verspannen des Bearbeitungswerkzeugs (4, 14) übertragen wird.

5. Befestigungseinrichtung (18) nach einem der vorstehenden Ansprüche, **dadurch gekennzeichnet, dass** die Riegelverbindung (30) mindestens zwei Riegelelemente (29) und/oder die Spanneinheit (28) mindestens zwei Klemmelemente (36) zum Verspannen des Bearbeitungswerkzeugs (4, 14) mit dem mindestens einen Anlagekörper (20) umfasst.

6. Befestigungseinrichtung (18) nach einem der vorstehenden Ansprüche, **dadurch gekennzeichnet, dass** die Spanneinheit (28) einen Betätigungseingriff (40) umfasst zum handbetriebenen Verlagern der Befestigungseinrichtung (18) zwischen einer Spannstellung und einer Offenstellung.

7. Befestigungseinrichtung (18) nach einem der vorstehenden Ansprüche, **dadurch gekennzeichnet, dass** die Spanneinheit (28) eine Exzenterwelle (35) mit einem Spannexzenterabschnitt (39) umfasst zum Wandeln eines Antriebsmoments (M_{A}) in eine Spannkraft (F_{A}) zum Verspannen des Bearbeitungswerkzeugs (4, 14).

8. Befestigungseinrichtung (18) nach einem der vorstehenden Ansprüche, **dadurch gekennzeichnet, dass** die Spanneinheit (28) in einer Spannstellung, in der das Bearbeitungswerkzeug (4, 14) mit dem Anlagekörper (20) verspannt ist, eine stabile Lage aufweist.

9. Befestigungseinrichtung (18) nach einem der vorstehenden Ansprüche, **dadurch gekennzeichnet, dass** die Spanneinheit (28) mindestens ein Umlenkmittel (54) zum Umlenken einer Antriebsbewegung in eine auf das Bearbeitungswerkzeug (4, 14) wirkende Spannbewegung um mindestens 45° umfasst.

10. Befestigungseinrichtung (18) nach einem der vorstehenden Ansprüche, **gekennzeichnet durch** mindestens ein Arretiermittel (42) zum Fixieren der Spanneinheit (28) in einer Spannstellung und/oder einer Offenstellung.

11. Befestigungseinrichtung (18) nach einem der vorstehenden Ansprüche, **dadurch gekennzeichnet, dass** das Bearbeitungswerkzeug (4, 14) eine Pressmatrize, insbesondere eine Stanzmatrize (14) oder eine Umformmatrize, ist.

12. Werkzeuganordnung (17) für eine Werkzeugmaschine (1), insbesondere eine Pressvorrichtung, aufweisend
- eine Befestigungseinrichtung (18) nach einem der Ansprüche 1 bis 11, und
- ein Bearbeitungswerkzeug (4, 14) zum Bearbeiten eines Werkstücks (6),
- wobei die Spanneinheit (28) mittels der Riegelverbindung (30) mit dem mindestens einen Anlagekörper (20) lösbar verbunden ist, und
- wobei das Bearbeitungswerkzeug (4, 14) mittels der Spanneinheit (28) mit dem mindestens einen Anlagekörper (20) lösbar verspannt ist.

13. Werkzeugmagazin (3), mit
- einem Magazingrundkörper (16), und
- mehreren an dem Magazingrundkörper (16) angebrachten Werkzeuganordnungen (17) nach Anspruch 12.

14. Verfahren zum Betrieb einer Werkzeugmaschine (1), umfassend die Schritte:
- Bereitstellen einer Werkzeugmaschine (1) mit einer Befestigungseinrichtung (18) nach einem der Ansprüche 1 bis 11,
- Bereitstellen eines Bearbeitungswerkzeugs (4, 14) zum Bearbeiten eines Werkstücks (6),
- Anordnen des Bearbeitungswerkzeugs (4, 14) an dem mindestens einen Anlagekörper (20),
- Anordnen der Spanneinheit (28) an dem mindestens einen Anlagekörper (20),
- Schließen der Riegelverbindung (30) zum Verbinden der Spanneinheit (28) mit dem mindestens einen Anlagekörper (20),
- Verspannen des Bearbeitungswerkzeugs (4, 14) mit dem mindestens einen Anlagekörper (20) mittels der Spanneinheit (28), und
- Bearbeiten des Werkstücks (6) mittels des Bearbeitungswerkzeugs (4, 14).

## Claims

1. Fastening device (18) for fastening a processing tool (4, 14) to a machine tool (1), in particular to a press device, having
- at least one counter clamping body (20), against which the processing tool (4, 14) can be clamped,
- a clamping unit (28) for the releasable clamping of the processing tool (4, 14) to the at least one counter clamping body (20), and
- a locking connection (30) for the releasable connection of the clamping unit (28) to the at least one counter clamping body (20),
**characterized by**
a linear guide (44) for limiting the movability of the clamping unit (28) relative to the at least one counter clamping body (20) along a joining direction (45), wherein the clamping unit (28) and the locking connection (30) can be designed in such a way that the provision of the clamping force (F_{A}) and the connection of the clamping unit (28) to the at least one counter clamping body can be accomplished independently of one another such that, to connect the clamping unit (28) to the at least one counter clamping body, it is not first necessary to overcome the clamping force (F_{A}).

2. Fastening device (18) according to Claim 1, **characterized in that** the clamping unit (28) and at least one locking element (29) of the locking connection (30) and/or at least one locking engagement feature (65) of the locking connection (30) are mounted on a closing body (21).

3. Fastening device (18) according to Claim 1 or 2, **characterized in that** the locking connection (30) comprises a latching connection for the latching connection of the clamping unit (28) to the at least one counter clamping body (20).

4. Fastening device (18) according to any of the preceding claims, **characterized in that** the clamping unit (28) has at least one spring means (55), via which a clamping force (Fs) for clamping the processing tool (4, 14) is transmitted.

5. Fastening device (18) according to any of the preceding claims, **characterized in that** the locking connection (30) comprises at least two locking elements (29) and/or the clamping unit (28) comprises at least two clamping elements (36) for clamping the processing tool (4, 14) to the at least one locating body (20).

6. Fastening device (18) according to any of the preceding claims, **characterized in that** the clamping unit (28) comprises an actuating engagement feature (40) for the manually operated movement of the fastening device (18) between a clamping position and an open position.

7. Fastening device (18) according to any of the preceding claims, **characterized in that** the clamping unit (28) comprises an eccentric shaft (35) having a clamping eccentric portion (39) for converting a drive torque (M_{A}) into a clamping force (F_{A}) for clamping the processing tool (4, 14).

8. Fastening device (18) according to any of the preceding claims, **characterized in that** the clamping unit (28) has a stable position in a clamping position, in which the processing tool (4, 14) is clamped to the counter clamping body (20).

9. Fastening device (18) according to any of the preceding claims, **characterized in that** the clamping unit (28) comprises at least one deflection means (54) for deflecting a driving movement by at least 45° into a clamping movement acting on the processing tool (4, 14).

10. Fastening device (18) according to any of the preceding claims, **characterized by** at least one retaining means (42) for fixing the clamping unit (28) in a clamping position and/or an open position.

11. Fastening device (18) according to any of the preceding claims, **characterized in that** the processing tool (4, 14) is a press die, in particular a punching die (14) or a forming die.

12. Tool arrangement (17) for a machine tool (1), in particular a press device, having
- a fastening device (18) according to any of Claims 1 to 11, and
- a processing tool (4, 14) for processing a workpiece (6),
- wherein the clamping unit (28) is releasably connected to the at least one counter clamping body (20) by means of the locking connection (30), and
- wherein the processing tool (4, 14) is releasably clamped to the at least one counter clamping body (20) by means of the clamping unit (28).

13. Tool magazine (3), having
- a magazine main body (16), and
- a plurality of tool arrangements (17) according to Claim 12 mounted on the magazine main body (16).

14. Method for operating a machine tool (1), comprising the following steps:
- providing a machine tool (1) having a fastening device (18) according to any of Claims 1 to 11,
- providing a processing tool (4, 14) for processing a workpiece (6),
- arranging the processing tool (4, 14) at the at least one counter clamping body (20),
- arranging the clamping unit (28) at the at least one counter clamping body (20),
- closing the locking connection (30) to connect the clamping unit (28) to the at least one counter clamping body (20),
- clamping the processing tool (4, 14) to the at least one counter clamping body (20) by means of the clamping unit (28), and
- processing the workpiece (6) by means of the processing tool (4, 14).

## Revendications

1. Dispositif de fixation (18) permettant de fixer un outil d'usinage (4, 14) sur une machine-outil (1), en particulier sur un dispositif de pressage, présentant
- au moins un corps d'appui (20) contre lequel l'outil d'usinage (4, 14) peut être serré,
- une unité de serrage (28) pour fournir une force de serrage (F_{A}) pour serrer de manière amovible l'outil d'usinage (4, 14) contre ledit au moins un corps d'appui (20), et
- une liaison par verrou (30) pour relier de manière amovible l'unité de serrage (28) audit au moins un corps d'appui (20)
**caractérisé par**
un guidage linéaire (44) pour limiter la capacité de déplacement de l'unité de serrage (28) par rapport audit au moins un corps d'appui (20) le long d'une direction d'assemblage (45), l'unité de serrage (28) et la liaison par verrou (30) étant conçues de telle sorte que la mise à disposition de la force de serrage (F_{A}) et la liaison de l'unité de serrage (28) avec ledit au moins un corps d'appui s'effectuent indépendamment l'une de l'autre de telle sorte que la force de serrage (F_{A}) ne doit pas être surmontée pour relier l'unité de serrage (28) avec ledit au moins un corps d'appui (20).

2. Dispositif de fixation (18) selon la revendication 1, **caractérisé en ce que** l'unité de serrage (28) et au moins un élément de verrouillage (29) de la liaison par verrou (30) et/ou au moins un engagement de verrouillage (65) de la liaison par verrou (30) sont montés sur un corps de fermeture (21).

3. Dispositif de fixation (18) selon la revendication 1 ou 2, **caractérisé en ce que** la liaison par verrou (30) comprend une liaison par encliquetage pour relier par encliquetage l'unité de serrage (28) audit au moins un corps d'appui (20).

4. Dispositif de fixation (18) selon l'une quelconque des revendications précédentes, **caractérisé en ce que** l'unité de serrage (28) présente au moins un moyen de ressort (55) par lequel une force de serrage (Fs) est transmise pour le serrage de l'outil d'usinage (4, 14).

5. Dispositif de fixation (18) selon l'une quelconque des revendications précédentes, **caractérisé en ce que** la liaison par verrou (30) comprend au moins deux éléments de verrou (29) et/ou l'unité de serrage (28) comprend au moins deux éléments de clippage (36) pour le serrage de l'outil d'usinage (4, 14) avec ledit au moins un corps d'appui (20).

6. Dispositif de fixation (18) selon l'une quelconque des revendications précédentes, **caractérisé en ce que** l'unité de serrage (28) comprend un engagement d'actionnement (40) pour déplacer manuellement le dispositif de fixation (18) entre une position de serrage et une position d'ouverture.

7. Dispositif de fixation (18) selon l'une quelconque des revendications précédentes, **caractérisé en ce que** l'unité de serrage (28) comprend un arbre excentrique (35) avec une section d'excentrique de serrage (39) pour convertir un couple d'entraînement (M_{A}) en une force de serrage (F_{A}) pour serrer l'outil d'usinage (4, 14).

8. Dispositif de fixation (18) selon l'une quelconque des revendications précédentes, **caractérisé en ce que** l'unité de serrage (28) présente une position stable dans une position de serrage dans laquelle l'outil d'usinage (4, 14) est serré avec le corps d'appui (20).

9. Dispositif de fixation (18) selon l'une quelconque des revendications précédentes, **caractérisé en ce que** l'unité de serrage (28) comprend au moins un moyen de déviation (54) pour dévier d'au moins 45° un mouvement d'entraînement en un mouvement de serrage agissant sur l'outil d'usinage (4, 14).

10. Dispositif de fixation (18) selon l'une quelconque des revendications précédentes, **caractérisé par** au moins un moyen d'arrêt (42) pour fixer l'unité de serrage (28) dans une position de serrage et/ou une position d'ouverture.

11. Dispositif de fixation (18) selon l'une quelconque des revendications précédentes, **caractérisé en ce que** l'outil d'usinage (4, 14) est une matrice de pressage, en particulier une matrice d'estampage (14) ou une matrice de formage.

12. Agencement d'outils (17) pour une machine-outil (1), en particulier un dispositif de pressage, présentant
- un dispositif de fixation (18) selon l'une quelconque des revendications 1 à 11, et
- un outil d'usinage (4, 14) pour l'usinage d'une pièce (6),
- dans lequel l'unité de serrage (28) est reliée de manière amovible audit au moins un corps d'appui (20) au moyen de la liaison par verrou (30), et
- dans lequel l'outil d'usinage (4, 14) est serré de manière amovible au moyen de l'unité de serrage (28) avec ledit au moins un corps d'appui (20).

13. Magasin d'outils (3), avec
- un corps de base de magasin (16), et
- plusieurs agencements d'outils (17) montés sur le corps de base du magasin (16) selon la revendication 12.

14. Procédé de fonctionnement d'une machine-outil (1), comprenant les étapes consistant à :
- fournir une machine-outil (1) avec un dispositif de fixation (18) selon l'une quelconque des revendications 1 à 11,
- fournir un outil d'usinage (4, 14) pour usiner une pièce (6),
- disposer l'outil d'usinage (4, 14) sur ledit au moins un corps d'appui (20),
- disposer l'unité de serrage (28) sur ledit au moins un corps d'appui (20),
- fermer la liaison par verrou (30) pour relier l'unité de serrage (28) audit au moins un corps d'appui (20),
- serrer l'outil d'usinage (4, 14) avec ledit au moins un corps d'appui (20) au moyen de l'unité de serrage (28), et
- usiner la pièce (6) au moyen de l'outil d'usinage (4, 14).
